# EUROPÄISCHE PATENTANMELDUNG

(11) **EP 4 297 049 A1**
(43) Veröffentlichungstag der Anmeldung: **27.12.2023**
(21) Anmeldenummer: 23174934.2
(22) Anmeldetag: 23.05.2023
(51) Int. Cl.: H01B 13/012, B60R 16/02, H02G 3/04

(54) **VERFAHREN ZUM BANDAGIEREN VON LEITUNGSSÄTZEN UND HALTETEILSETZEN**

(30) Priorität: 20.06.2022 DE 102022115225
(71) Anmelder: Lisa Dräxlmaier GmbH, 84137 Vilsbiburg (DE)
(72) Erfinder: Neuhaus, Patrick, 84140 Gangkofen (DE); Zellhuber, Sebastian, 84329 Wurmannsquick (DE); Kallee, Klaus, 84137 Vilsbiburg (DE)

(57) **Zusammenfassung**

Vorgeschlagen wird ein Verfahren zum Bandagieren eines Leitungssatzes (110). Zudem wird ein nach einem solchen Verfahren bandagierter Leitungssatz (110) vorgeschlagen, sowie eine Vorrichtung (100) zum Bandagieren eines Leitungssatzes (110). Gemäß dem Verfahren werden der Leitungssatz (110) und das Schutzmaterial (120) so positioniert und einander zugeordnet, dass das Schutzmaterial (120) auf zwei einander gegenüberliegenden Seiten quer zu einer Längsrichtung eines Segmentes (111) des Leitungssatzes einen jeweiligen Überstand (122) bildet. Weiterhin werden die zwei Überstände (122) des Schutzmaterials (120) um das Segment (111) des Leitungssatzes herum umgestülpt, wodurch die zwei Überstände (122) miteinander in Kontakt gebracht werden und das Schutzmaterial (120) den Leitungssatz (110) umgibt. Die Überstände (122) des Schutzmaterials (120) werden miteinander verbunden, so dass eine von dem Segment (111) des Leitungssatzes (110) abstehende Fahne (123) aus Schutzmaterial (120) entsteht, und es wird ein Halteteil (130) mit einer Befestigungsfläche (133) an der Fahne (123) aus Schutzmaterial (120) angeordnet und mit der Fahne (123) verschweißt, wobei das Halteteil (130) ausgeführt ist, in einem Fahrzeug befestigt zu werden.

## Beschreibung

### Technisches Gebiet

Die vorliegende Erfindung betrifft ein Verfahren zum automatisierten Bandagieren von Leitungssätzen und zum Setzen von Halteteilen an dem bandagierten Leitungssatz. Zudem betrifft die Erfindung einen mit dem erfindungsgemäßen Verfahren bandagierten Leitungssatz sowie eine Vorrichtung zum automatisierten Bandagieren von Leitungssätzen und zum Setzen von Halteteilen an dem bandagierten Leitungssatz.

### Stand der Technik

Die Bandagierung von Leitungssätzen erfolgt im Stand der Technik üblicherweise mittels Klebeband, welches in einer rotierenden Bewegung um den Leitungssatz gewickelt wird. Dabei muss bei der rotierenden Bewegung bei jeder Wickelumdrehung mit dem Klebeband zweimal die Leitungssatzebene durchdrungen werden. Dabei stellt der Leitungssatz jedes Mal eine Störkontur dar, welche eine Automatisierung des Prozesses erschwert. Des Weiteren ist diese Art der Bandagierung sehr zeitaufwändig. Nach dem Bandagieren müssen die Leitungssätze mit Halteteilen versehen werden, mittels derer der Leitungssatz an oder in einem Fahrzeug befestigt werden kann.

Halteteile, welche den Leitungssatz am Gesamtfahrzeug fixieren, werden üblicherweise durch Kabelbinder bzw. Klebeband am Leitungssatz angebracht. Der Fertigungsprozess ist dabei sehr komplex, zeitaufwändig und schwer zu automatisieren. Beim mit Klebeband fixierten Halteteil müssen mehrere Umwicklungen eines Flügels des Halteteils angebracht werden, wobei ein mechanisches Umgreifen erfolgen muss. Zudem ist ein automatisiertes Klebebandhandling mit Anbringen, Abschneiden, Fangen und Halten des Klebebandes nur sehr komplex zu realisieren. Beim mittels Kabelbinder fixierten Halteteil muss die enge Kavität des Kabelbinders mit dem Gegenstück getroffen werden. Dies ist für automatisierte Anwendungen sehr herausfordernd. Auch soll der Leitungssatz möglichst einfach in einem Fahrzeug verbaut werden können.

Es besteht daher der Bedarf nach einem verbesserten Verfahren zur Bandagierung von Leitungssätzen und zum Anbringen von Halteteilen, welches eine automatisierte Fertigung ermöglicht.

### Beschreibung der Erfindung

Eine Aufgabe der Erfindung ist es daher, ein verbessertes Verfahren bereitzustellen, welches automatisiert und kostengünstig ausgeführt werden kann und das Bandagieren von Leitungssätzen und das Anbringen von Halteteilen am Leitungssatz ermöglicht.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die beschriebenen Ausführungsformen gelten gleichermaßen für das Verfahren zur Bandagierung eines Leitungssatzes, den Leitungssatz sowie die Vorrichtung zur Bandagierung eines Leitungssatzes. Synergetische Effekte können aus verschiedenen Kombinationen der Ausführungsformen entstehen, auch wenn sie nicht im Detail beschrieben sind.

Weiterhin soll darauf hingewiesen werden, dass alle ein Verfahren betreffende Ausführungsformen der vorliegenden Erfindung in der beschriebenen Reihenfolge der Schritte ausgeführt werden können. Trotzdem muss das nicht die einzigmögliche und erforderliche Reihenfolge der Schritte des Verfahrens sein. Die hierin beschriebenen Verfahren können in einer anderen Reihenfolge der offenbarten Schritte ausgeführt werden, ohne von der entsprechenden Ausführungsform des Verfahrens abzuweichen, sofern nicht nachfolgend ausdrücklich das Gegenteil erwähnt wird.

Vorgeschlagen wird ein Verfahren zum Bandagieren eines Leitungssatzes. Das Verfahren weist die Schritte des Bereitstellens eines Leitungssatzes und des Vorbereitens eines Schutzmateriales für den Leitungssatz auf. Der Leitungssatz beziehungsweise das Schutzmaterial wird so positioniert, dass einem Segment des Leitungssatzes ein Segment des Schutzmaterials zugeordnet ist, wobei das Schutzmaterial auf zwei einander gegenüberliegenden Seiten quer zu einer Längsrichtung des Segmentes des Leitungssatzes einen jeweiligen Überstand bildet. Die zwei Überstände des Schutzmaterials werden umgestülpt, wobei die zwei Überstände miteinander in Kontakt gebracht werden, so dass das Segment des Schutzmaterials einen Kanal bildet, durch welchen das Segment des Leitungssatzes verläuft. Die zwei miteinander in Kontakt gebrachten Überstände des Schutzmaterials werden miteinander verbunden, so dass eine von dem Segment des Leitungssatzes abstehende Fahne aus Schutzmaterial entsteht. Ein Halteteil wird bereitgestellt, welches an einem ersten Ende eine Befestigungsfläche aufweist, die ausgeführt ist, mit der Fahne aus Schutzmaterial verschweißt zu werden. Ein zweites Ende des Halteteils kann in einem Fahrzeug befestigt werden. Die Befestigungsfläche des Halteteils wird an der Fahne aus Schutzmaterial angeordnet und verschweißt.

Somit kann im ersten Schritt des Verfahrens ein Schutzmaterial auf einem Produktträger ausgerollt werden. Das Ausrollen geschieht vorzugsweise vollautomatisch, sodass für jedes Teilsegment des Leitungssatzes ein Segment Schutzmaterial auf dem Produktträger vorhanden ist. Das Schutzmaterial kann in Form einzelner Bahnen ausgebracht werden, oder in Form eines vorkonfektionierten, an den Leitungssatz angepassten Musters. Nachfolgend wird der vorkonfektionierte Leitungssatz auf dem Produktträger über das Schutzmaterial gelegt. Alternativ kann der Leitungssatz an einem Produktträger angebracht werden, bevor Segmente des Schutzmaterials an den zugehörigen Segmenten des Leitungssatzes angebracht werden. Das Schutzmaterial weist dabei eine Breite auf, welche größer ist als eine Breite der Stränge bzw. Segmente des Leitungssatzes. Das Schutzmaterial ist auch breiter, als ein Umfang des Leitungssatzes. Dadurch steht auf beiden Seiten des Leitungssatzsegmentes ein Überstand aus dem Schutzmaterial über. Dieser Überstand wird beidseitig um das Segment des Leitungssatzes umgeklappt, so dass das Segment des Leitungssatzes auf allen Seiten von dem Schutzmaterial umgeben ist und einzelne Leitungen des Leitungssatzes zusammengehalten werden. Dabei findet vorzugsweise kein Einrollen des Leitungssatzes in das Schutzmaterial statt; das Umstülpen der Überstände findet vielmehr derart statt, dass die beiden umgeschlagenen Überstände miteinander in Kontakt gebracht und miteinander verbunden werden, so dass eine von dem Segment des Leitungssatzes abstehende Fahne entsteht. Diese Fahne verläuft in Längsrichtung zum Leitungssatz, und bietet eine Montagefläche für Halteteile. Ein Halteteil wird mit einer Befestigungsfläche des Halteteils in Kontakt zur Montagefläche der Fahne gebracht und darauf verschweißt. Ein zusätzliches Klebeband ist nicht notwendig, da die durch das Umschlagen des Schutzmaterials entstehende Fahne als Montagefläche verwendet wird. Das Halteteil kann dann in einem Fahrzeug befestigt werden, und so den Leitungssatz im Fahrzeug fixieren.

Durch das erfindungsgemäße Verfahren wird keine aus einem Wickelprozess resultierende rotierende Bewegung um den Leitungssatz mehr benötigt. Somit stellt der Leitungssatz keine Störkontur mehr für den Wickelautomaten dar. Durch die Erfindung wird nur noch eine lineare Bewegung in Richtung der Segmentverläufe des Leitungssatzes erfordert. Aus diesem Grund kann eine Taktzeitreduzierung erwirkt und die Zeit sowie die Kosten für die Konfektionierung eines Leitungssatzes reduziert werden. Durch das vorgestellte Verfahren können Leitungssätze, egal in welcher Struktur und Form, vollständig automatisiert mit Leitungsschutz versehen werden, was mit aktuell bekannten Leitungsschutzkonzepten nicht realisierbar ist. Als Vorteile des erfindungsgemäßen Verfahrens ergeben sich somit, wie oben beschrieben ein vollständiger Automatisierungsgrad bei der Leitungsschutz-Montage, eine Verringerung der Taktzeit sowie eine Erhöhung der Wirtschaftlichkeit, eine verbesserte Prozessüberwachung sowie eine Vereinfachung der Montage des Leitungssatzes im Fahrzeug. Die Montage des Halteteils auf der Fahne bietet die weiteren Vorteile, dass das Risiko der Beschädigung der Leitungen durch den Abstand zwischen dem Schweißbereich und den Leitungen reduziert wird, sowie dass für die Befestigung des Halteteils kein Durchdringen der Leitungssatzebene notwendig ist.

In Automatisierungslösungen ist ein modularer, skalierbarer Ansatz wünschenswert. Damit können Leitungssätze nach ihren Eigenschaften in Produktfamilien eingruppiert und mit passenden Prozessmodulen bearbeitet werden. Die bei dem vorstehend beschriebenen Bandagierungsprozess entstehende Fahne ist mit bestehenden Halteteilen und deren Befestigungsart nur schlecht kompatibel. Durch die Verwendung der Fahne als Montagefläche für ein Halteteil gemäß der Erfindung wird ein vorteilhafter synergetischer Effekt benutzt. Daraus resultiert ein alternatives Fertigungskonzept, welches das beschriebene Längswickeln mit an der Fahne angeschweißten Halteteilen enthält.

In einer Weiterbildung der Erfindung weist das Halteteil an seinem ersten Ende zumindest einen seitlich abstehenden Flügel auf, welcher zumindest einen Teil der Befestigungsfläche bildet. Die Form des Halteteils kann der eines herkömmlichen, in einem Wickelprozess benutzten, Wickelclips ähnlich sein. Die Flügel, die im konventionellen Prozess benutzt werden um den Clip mit Klebeband anzuwickeln, werden bei dem erfindungsgemäßen Verfahren als Schweißfläche genutzt. In einer Weiterentwicklung ist es möglich, Clips aus einem amorphen Kunststoff wie beispielsweise ABS anstatt aus einem kristallinen PA herzustellen, um den Schweißprozess weiter zu verbessern und eine Taktzeitreduzierung zu erreichen. Auch eine Verringerung der Dicke der Flügel ist vorteilhaft. Ebenso können Clips als Halteteile verwendet werden, welche nur einen Flügel aufweisen, welcher sich vom ersten Ende des Halteteils erstreckt. Die bei einem Bandagierungsprozess wie dem Längswickeln entstehende Fahne wird als Befestigungsfläche für das Halteteil benutzt.

In einer Weiterbildung der Erfindung erfolgt das Umstülpen der zwei Überstände des Schutzmaterials durch einen Einführtrichter, wobei eine Bündelung von Leitungen des Leitungssatzes erfolgt. Der Leitungsschutz wie das Schutzmaterial für den Leitungssatz kann durch zwei Gabeln links und rechts neben dem Leitungsbündel des Leitungssatzsegmentes aufgestülpt oder umgeschlagen werden. Vorzugsweise in derselben Bewegung bündelt ein Einführtrichter die Leitungen, sodass eine Streuung der Leitungen aufgefangen wird. Dadurch kann eine kompakte, zentrierte Lage des Leitungsbündels innerhalb des aus dem Schutzmaterial gebildeten Kanals erreicht werden.

In einer Weiterbildung der Erfindung erfolgt das Verbinden durch Verschweißen oder Verkleben, und das Verschweißen erfolgt vorzugsweise durch Ultraschallschweißen. Demnach können die Überstände des Schutzmaterials miteinander verklebt oder verschweißt werden. Die Befestigung des Halteteils auf der Fahne erfolgt durch Verschweißung. Vorzugsweise erfolgt die Verschweißung mittels Kunststoff-Ultraschallschweißen. Beim Ultraschall-Konfektionieren werden zwei Kunststoff-Materialien durch eine Ultraschallquelle miteinander verschweißt. Dieser Prozess ist gut kontrollierbar und ermöglicht ein präzises Verschweißen des Halteteils mit der Fahne. Die entsprechenden Stellen des Halteteils werden durch die Sonotrode eines Ultraschallschweißgerätes bzw. durch die dadurch eingebrachte Energie erhitzt und damit in den plastisch verformbaren Bereich gebracht. In diesem Zustand verbindet sich das Halteteil mit dem darunterliegenden Schutzmaterial. Als Schutzmaterial kann vorzugsweise Klebeband, oder Materialien aus Vlies, Gewebe, oder PVC verwendet werden.

In einer Weiterbildung der Erfindung erfolgt das Umstülpen der Überstände und das Verbinden der Überstände in einer linearen Bewegung entlang der Längsrichtung des Segmentes des Leitungssatzes. Die Bandagierung des Leitungssatzes kann damit in einer Bewegung in der Leitungssatzebene erfolgen, so dass ein wiederholtes Durchdringen der Ebene nicht notwendig ist. Der Montagekopf einer Vorrichtung zum Bandagieren eines Leitungssatzes kann sich entlang dem Leitungsbündel eines Leitungssatzsegmentes bewegen und dabei die Überstände umklappen und miteinander in Kontakt bringen. Im Nachgang, und vorzugsweise in derselben Bewegung, werden die beiden umgeschlagenen Überstände durch die Ultraschallapplikation miteinander verschweißt. Daraus resultiert ein mit Schutzmaterial ummantelter Leitungssatz

In einer Weiterbildung der Erfindung wird der Leitungssatz auf einer Trägerstruktur angeordnet, auf welcher Aufnahmen vorgesehen sind, in die an Enden von Segmenten des Leitungssatzes befindliche Steckergehäuse eingebracht werden. Dabei können die Gehäuse an den Enden der Segmente des Leitungssatzes vollautomatisiert in die Gehäuseaufnahmen eingebracht werden. Die Aufnahmen ermöglichen dabei eine geordnete und präzise Anordnung des vorgefertigten Leitungssatzes im Raum auf der Trägerstruktur.

In einer Weiterbildung der Erfindung wird der Leitungssatz auf einer Trägerstruktur angeordnet, auf welcher Haltemittel angebracht sind, in welche der Leitungssatz angeordnet wird, wobei die Haltemittel dazu ausgeführt sind, dem Leitungssatz eine räumliche Struktur zu geben. Zur Strukturerzeugung können Alustifte an den Abgriffen und Kreuzungen des Leitungssatz als Haltemittel dienen, welche vorzugsweise aus der Produktträgerebene der Trägerstruktur ragen. Die Einhaltung der vorbestimmten Struktur ermöglicht die automatisierte Anbringung des Schutzmaterials auf dem Leitungssatz.

In einer Weiterbildung der Erfindung weist das Verfahren weiterhin den Schritt des Abtrennens eines Teils der Fahne auf, welcher außerhalb eines Bereichs liegt, in welchem die zwei Überstände miteinander verbunden sind. Dabei kann ein eventueller Materialüberschuss entfernt werden, der zum Beispiel bei Leitungssatzsegmenten mit geringer Leitungsanzahl auftreten kann. Auch kann nur an für eine Befestigung vorbestimmten Positionen entlang des Leitungssatzes eine Fahne von ausreichender Größe stehen gelassen werden, so dass lediglich an den Positionen, an denen ein Halteteil angebracht werden soll, eine ausreichend große Montagefläche stehen bleibt. Zwischen benachbarten Halteteilen kann eine dünnere Schweißnaht ausreichend sein.

Vorgeschlagen wird weiterhin ein Leitungssatz, welcher mit dem Verfahren nach einem der vorstehend beschriebenen Weiterbildungen bandagiert und mit Halteteilen versehen ist. Dieser Leitungssatz weist ein in Längsrichtung umgeschlagenes Schutzmaterial auf, welches die einzelnen Segmente des Leitungssatzes umgibt. An der Nahtstelle des Schutzmaterials steht ein verschweißter oder verklebter Überstand über, welcher eine Fahne bildet, an der ein Halteteil angeschweißt ist. Mit diesem Halteteil kann der Leitungssatz befestigt werden, wie beispielsweise in einem Fahrzeug.

Vorgeschlagen wird weiterhin eine Vorrichtung zum Bandagieren eines Leitungssatzes. Die Vorrichtung weist eine Trägerstruktur auf, die zur Aufnahme eines Leitungssatzes ausgeführt ist. Ebenso weist die Vorrichtung eine Positioniereinheit auf, die ausgeführt ist, den Leitungssatz beziehungsweise ein Schutzmaterial so zu positionieren, dass einem Segment des Leitungssatzes ein Segment des Schutzmaterials zugeordnet ist, wobei das Schutzmaterial auf zwei einander gegenüberliegenden Seiten quer zu einer Längsrichtung des Segmentes des Leitungssatzes einen jeweiligen Überstand bildet. Weiterhin weist die Vorrichtung eine Verbindungseinheit auf, die zum Umstülpen der zwei Überstände des Schutzmaterials ausgeführt ist, wobei die zwei Überstände miteinander in Kontakt gebracht werden, so dass das Segment des Schutzmaterials einen Kanal bildet, durch welchen das Segment des Leitungssatzes verläuft. Die Verbindungseinheit ist ausgeführt zum Verbinden der zwei Überstände des Schutzmaterials, so dass eine von dem Segment des Leitungssatzes abstehende Fahne aus Schutzmaterial entsteht. Die Vorrichtung weist eine Halteteilanordnungseinheit auf, die zum Anordnen eines Halteteils an der Fahne aus Schutzmaterial ausgeführt ist, wobei das Halteteil an einem ersten Ende eine Befestigungsfläche aufweist, die ausgeführt ist, mit der Fahne aus Schutzmaterial verschweißt zu werden, und wobei das Halteteil an einem zweiten Ende ausgeführt ist, in einem Fahrzeug befestigt zu werden. Weiterhin weist die Vorrichtung eine Schweißeinheit auf, ausgeführt zum Verschweißen der Befestigungsfläche des Halteteils mit der Fahne aus Schutzmaterial.

Somit gelten die Vorteile, die einer der oben genannten Aspekte bietet, gleichermaßen für alle anderen Aspekte und umgekehrt.

Im Wesentlichen bezieht sich die Erfindung auf ein Verfahren zum Bandagieren eines Leitungssatzes. Zudem wird ein nach einem solchen Verfahren bandagierter Leitungssatz vorgeschlagen, sowie eine Vorrichtung zum Bandagieren eines Leitungssatzes. Gemäß dem Verfahren werden der Leitungssatz und das Schutzmaterial so positioniert und einander zugeordnet, dass das Schutzmaterial auf zwei einander gegenüberliegenden Seiten quer zu einer Längsrichtung eines Segmentes des Leitungssatzes einen jeweiligen Überstand bildet. Weiterhin werden die zwei Überstände des Schutzmaterials um das Segment des Leitungssatzes herum umgestülpt, wodurch die zwei Überstände miteinander in Kontakt gebracht werden und das Schutzmaterial den Leitungssatz umgibt. Die Überstände des Schutzmaterials werden miteinander verbunden, so dass eine von dem Segment des Leitungssatzes abstehende Fahne aus Schutzmaterial entsteht, und es wird ein Halteteil mit einer Befestigungsfläche an der Fahne aus Schutzmaterial angeordnet und mit der Fahne verschweißt, wobei das Halteteil ausgeführt ist, in einem Fahrzeug befestigt zu werden.

Weitere Merkmale, Vorteile und Anwendungsmöglichkeiten der Erfindung ergeben sich aus der nachfolgenden Beschreibung von vorteilhaften Ausführungsformen und den begleitenden Figuren.

### Kurze Figurenbeschreibung

Nachfolgend wird ein vorteilhaftes Ausführungsbeispiel der Erfindung unter Bezugnahme auf die begleitenden Figuren erläutert. Es zeigen:
Fig. 1 in einer Draufsicht eine Anordnung von einem Leitungssatz relativ zu einem vorbereiteten Schutzmaterial mit Überständen gemäß einer Ausführungsform,
Fig. 2 eine schematische Übersicht einer Vorrichtung zum Bandagieren von Leitungssätzen und zum Setzen von Halteteilen gemäß einer Ausführungsform,
Fig. 3A eine Schnittansicht eines bandagierten Segmentes eines Leitungssatzes mit auf der Fahne angebrachtem Halteteil gemäß einer Ausführungsform, und
Fig. 3B eine Draufsicht auf ein bandagiertes Segment eines Leitungssatzes mit auf der Fahne angebrachtem Halteteil gemäß einer Ausführungsform.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

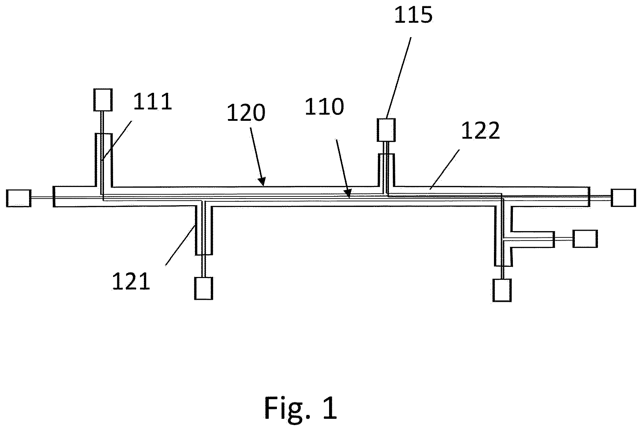

Fig. 1 zeigt in einer Draufsicht eine Anordnung von einem Leitungssatz 110 relativ zu einem vorbereiteten Schutzmaterial 120 mit Überständen 122 gemäß einer Ausführungsform. Die einzelnen Segmente 111 des Leitungssatzes 110 sind jeweils einem der Segmente 121 des Schutzmaterials 120 zugeordnet, wobei auf jeder Seite jedes Segmentes 111 ein Überstand 122 aus Schutzmaterial 120 über den Leitungssatz übersteht. Jedes Segment 111 des Leitungssatzes 110 kann eine Vielzahl von einzelnen Leitungen 112 beinhalten. Am Ende jedes Segmentes 111 befindet sich in dieser Ausführungsform der Erfindung ein Steckergehäuse 115. Figur 1 zeigt dabei den Leitungssatz 110 während des Bandagierprozesses, und bevor die seitliche Überstände 122 umgeschlagen und miteinander verbunden wurden.

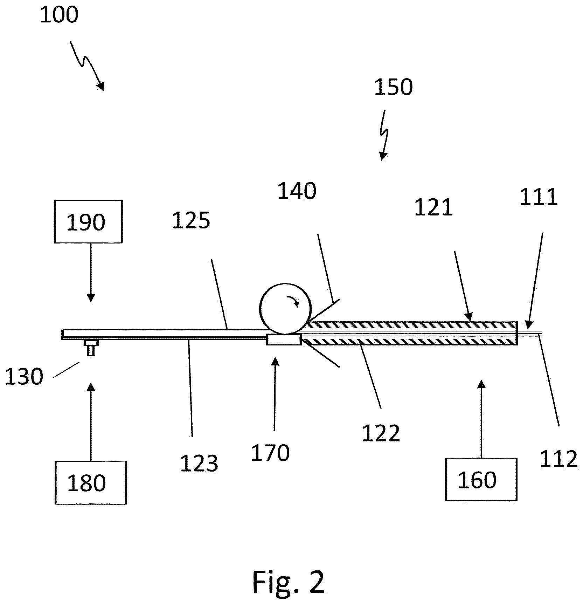

Fig. 2 zeigt eine schematische Übersicht einer Vorrichtung 100 zum Bandagieren von Leitungssätzen 110 und zum Setzen von Halteteilen 130 gemäß einer Ausführungsform. Ein Segment 111 eines Leitungssatzes mit einer Vielzahl von Leitungen 112 ist mittig auf einem Segment 121 aus Schutzmaterial positioniert, so dass auf beiden Seiten der Leitungen 112 des Segmentes des Leitungssatzes ein Überstand 122 aus Schutzmaterial übersteht. Dies kann durch die Positioniereinheit 160 bewerkstelligt werden. Dabei können der Leitungssatz und/oder das Schutzmaterial auf einer Trägerstruktur 150 fixiert sein. Eine Verbindungseinheit 170 kann sich längs der Segmente 111, 121 bewegen und die Überstände 122 um das Segment 111 des Leitungssatzes 110 umklappen. Vorzugsweise in derselben Bewegung kann ein aneinander Verbinden der umgeklappten oder umgestülpten Überstände 122 durch Verkleben oder Verschweißen erfolgen. Die Verbindungseinheit 170 kann einen Einführtrichter 150 aufweisen, der ein Bündeln der Leitungen 112 und eine symmetrische, mittige Position der Leitungen bzgl. des Schutzmaterials 120 bewirkt. Nach dem Umstülpen und Verbinden der Überstände 122 bildet das Segment 121 des Schutzmaterials einen Kanal 125, durch welchen das Segment 111 des Leitungssatzes verläuft. Die miteinander verbundenen Überstände 122 bilden eine seitlich von dem Kanal 125 und somit vom Segment 111 des Leitungssatzes abstehende flache Fahne 123. Auf dieser Fahne 123 wird durch die Halteteilanordnungseinheit 180 ein Halteteil 130 arrangiert, und eine Befestigungsfläche 133 des Halteteils 130 wird durch die Schweißeinheit 190 mit der Fahne 123 verschweißt. Auf diese Weise kann der Leitungssatz mittels einem oder mehrerer der Halteteile 130 in einem Fahrzeug fixiert werden.

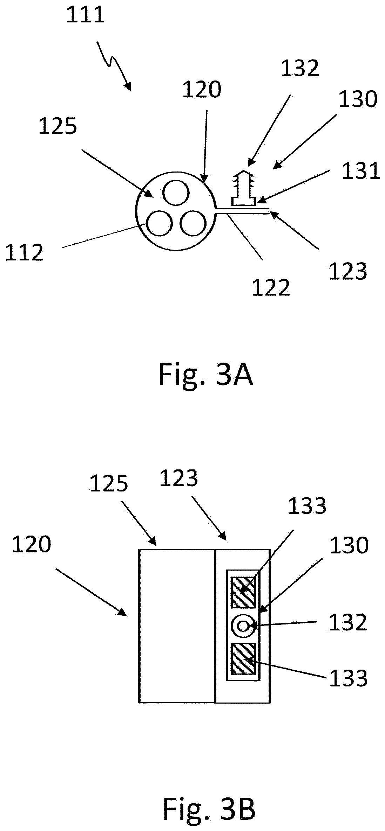

Fig. 3A zeigt eine Schnittansicht eines bandagierten Segmentes 111 eines Leitungssatzes mit auf der Fahne 123 angebrachtem Halteteil 130 gemäß einer Ausführungsform. Die Leitungen 112 des Leitungssatzes 110 befinden sich in dem Kanal 125 aus Schutzmaterial 120. Auf der aus den Überständen 122 gebildeten Fahne 123 ist ein Halteteil 130 angebracht. An dem ersten Ende 131 des Halteteils 130 ist eine Befestigungsfläche 133 vorgesehen, die mit der Fahne 123 aus Schutzmaterial 120 in Kontakt steht und mit dieser verschweißt ist. Am zweiten Ende 132 des Halteteils 130 ist das Halteteil geformt, um in einem Fahrzeug befestigt zu werden und damit den Leitungssatz im Fahrzeug zu fixieren.

Fig. 3B zeigt eine Draufsicht auf ein bandagiertes Segment 111 eines Leitungssatzes 110 mit auf der Fahne 123 angebrachtem Halteteil 130 gemäß einer Ausführungsform. Neben dem Kanal 125 aus Schutzmaterial 120 befindet sich die seitlich abstehende, flächige Fahne 123. Auf dieser ist ein Halteteil 130 angebracht. Das Halteteil weist in dieser Ausführungsform an seinem ersten Ende 131 zwei abstehende flach Flügel auf, welche jeweils als Teil der Befestigungsfläche 133 dienen. Mittels dieser kann das Halteteil 130 auf der Fahne 123 verschweißt werden. Am oberen, freien Ende 132 des Halteteils 130 ist ein Befestigungsmechanismus zur Befestigung am oder im Fahrzeug abgebildet.

Obwohl die Erfindung in den Zeichnungen und der vorstehenden Beschreibung illustriert und detailliert beschrieben wurde, sind diese Zeichnungen und Beschreibungen als illustrativ oder beispielhaft zu verstehen und nicht als einschränkend zu betrachten. Die Erfindung ist nicht auf die offenbarten Ausführungsformen beschränkt. Andere Variationen der offenbarten Ausführungsformen können von den Fachleuten, die die beanspruchte Erfindung ausführen, anhand der Zeichnungen, der Offenbarung und der abhängigen Ansprüche verstanden und ausgeführt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHENLISTE

- 100: Vorrichtung
- 110: Leitungssatz
- 111: Segment des Leitungssatzes
- 112: Leitungen
- 115: Steckergehäuse
- 120: Schutzmaterial
- 121: Segment des Schutzmaterials
- 122: Überstand
- 123: Fahne
- 125: Kanal
- 130: Halteteil
- 131: erstes Ende des Halteteils
- 132: zweites Ende des Halteteils
- 133: Befestigungsfläche
- 134: Flügel
- 140: Einführtrichter
- 150: Trägerstruktur
- 160: Positioniereinheit
- 170: Verbindungseinheit
- 180: Halteteilanordnungseinheit
- 190: Schweißeinheit

## Patentansprüche

1. Verfahren zum Bandagieren eines Leitungssatzes (110), das Verfahren aufweisend die Schritte:
Bereitstellen eines Leitungssatzes (110);
Vorbereiten eines Schutzmateriales (120) für den Leitungssatz (110);
Positionieren des Leitungssatzes (110) und/oder des Schutzmaterials (120), so dass einem Segment (111) des Leitungssatzes (110) ein Segment (121) des Schutzmaterials (120) zugeordnet ist, wobei das Schutzmaterial (120) auf zwei einander gegenüberliegenden Seiten quer zu einer Längsrichtung des Segmentes (111) des Leitungssatzes einen jeweiligen Überstand (122) bildet;
Umstülpen der zwei Überstände (122) des Schutzmaterials (120), wobei die zwei Überstände (122) miteinander in Kontakt gebracht werden, so dass das Segment (121) des Schutzmaterials einen Kanal (125) bildet, durch welchen das Segment (111) des Leitungssatzes verläuft;
Verbinden der zwei miteinander in Kontakt gebrachten Überstände (122) des Schutzmaterials (120), so dass eine von dem Segment (111) des Leitungssatzes (110) abstehende Fahne (123) aus Schutzmaterial (120) entsteht;
Bereitstellen eines Halteteils (130), wobei das Halteteil (130) an einem ersten Ende (131) eine Befestigungsfläche (133) aufweist, die ausgeführt ist, mit der Fahne (123) aus Schutzmaterial (120) verschweißt zu werden, und wobei das Halteteil (130) an einem zweiten Ende (132) ausgeführt ist, in einem Fahrzeug befestigt zu werden;
Anordnen der Befestigungsfläche (133) des Halteteils (130) an der Fahne (123) aus Schutzmaterial (120); und
Verschweißen der Befestigungsfläche (133) des Halteteils (130) mit der Fahne (123) aus Schutzmaterial (120).

2. Verfahren nach Anspruch 1, wobei das Halteteil (130) an seinem ersten Ende (131) zumindest einen seitlich abstehenden Flügel (134) aufweist, welcher zumindest einen Teil der Befestigungsfläche (133) bildet.

3. Verfahren nach einem der Ansprüche 1 oder 2, wobei das Umstülpen der zwei Überstände (122) des Schutzmaterials (120) durch einen Einführtrichter (140) erfolgt, wobei eine Bündelung von Leitungen (112) des Leitungssatzes (110) erfolgt.

4. Verfahren nach einem der vorhergehenden Ansprüche, wobei das Verbinden durch Verschweißen oder Verkleben erfolgt, und wobei das Verschweißen vorzugsweise durch Ultraschallschweißen erfolgt.

5. Verfahren nach einem der vorhergehenden Ansprüche, wobei das Umstülpen der Überstände (122) und das Verbinden der Überstände (122) in einer linearen Bewegung entlang der Längsrichtung des Segmentes (111) des Leitungssatzes (110) erfolgt.

6. Verfahren nach einem der vorhergehenden Ansprüche, wobei der Leitungssatz (110) auf einer Trägerstruktur (150) angeordnet wird, und wobei auf der Trägerstruktur (150) Aufnahmen vorgesehen sind, in welche an Enden von Segmenten (110) des Leitungssatzes (110) befindliche Steckergehäuse (115) eingebracht werden.

7. Verfahren nach einem der vorhergehenden Ansprüche, wobei der Leitungssatz (110) auf einer Trägerstruktur (150) angeordnet wird, und wobei auf der Trägerstruktur (150) Haltemittel angebracht sind, in welche der Leitungssatz (110) angeordnet wird, und wobei die Haltemittel dazu ausgeführt sind, dem Leitungssatz (110) eine räumliche Struktur zu geben.

8. Verfahren nach einem der vorhergehenden Ansprüche, weiterhin aufweisend den Schritt des Abtrennens eines Teils der Fahne (123), welcher außerhalb eines Bereichs liegt, in welchem die zwei Überstände (122) miteinander verbunden sind.

9. Leitungssatz (110), bandagiert und mit Halteteilen (130) versehen gemäß dem Verfahren nach einem der Ansprüche 1 bis 8.

10. Vorrichtung (100) zum Bandagieren eines Leitungssatzes (110), aufweisend:
eine Trägerstruktur (150), ausgeführt zur Aufnahme eines Leitungssatzes (110);
eine Positioniereinheit (160), ausgeführt zum Positionieren des Leitungssatzes (110) und/oder eines Schutzmaterials (120), so dass einem Segment (111) des Leitungssatzes (110) ein Segment (121) des Schutzmaterials (120) zugeordnet ist, wobei das Schutzmaterial (120) auf zwei einander gegenüberliegenden Seiten quer zu einer Längsrichtung des Segmentes (111) des Leitungssatzes (110) einen jeweiligen Überstand (122) bildet;
eine Verbindungseinheit (170), ausgeführt zum Umstülpen der zwei Überstände (122) des Schutzmaterials (120), wobei die zwei Überstände (122) miteinander in Kontakt gebracht werden, so dass das Segment (121) des Schutzmaterials (120) einen Kanal (125) bildet, durch welchen das Segment (111) des Leitungssatzes (110) verläuft, und ausgeführt zum Verbinden der zwei Überstände (122) des Schutzmaterials (120), so dass eine von dem Segment (111) des Leitungssatzes (110) abstehende Fahne (123) aus Schutzmaterial (120) entsteht;
eine Halteteilanordnungseinheit (180), ausgeführt zum Anordnen eines Halteteils (130) an der Fahne (123) aus Schutzmaterial (120), wobei das Halteteil (130) an einem ersten Ende (131) eine Befestigungsfläche (133) aufweist, die ausgeführt ist, mit der Fahne (123) aus Schutzmaterial (120) verschweißt zu werden, und wobei das Halteteil (130) an einem zweiten Ende (132) ausgeführt ist, in einem Fahrzeug befestigt zu werden; und
eine Schweißeinheit (190), ausgeführt zum Verschweißen der Befestigungsfläche (133) des Halteteils (130) mit der Fahne (123) aus Schutzmaterial (120).
